# EUROPEAN PATENT SPECIFICATION

(11) **EP 0 533 759 B1**
(45) Date of publication and mention of the grant of the patent: **02.03.1994**
(21) Application number: 91910982.7
(22) Date of filing: 12.06.1991
(51) Int. Cl.: F02M 25/00, F23G 7/06

(54) **A METHOD OF REMOVING HYDROCARBONS FROM THE AIR**
VERFAHREN ZUR ENTFERNUNG VON KOHLENWASSERSTOFFEN AUS DER LUFT
PROCEDE D'ELIMINATION DES HYDROCARBURES DE L'AIR

(30) Priority: 13.06.1990 DK 1438/90
(43) Date of publication of application: 31.03.1993
(73) Proprietor: JACOBSEN, Anker Jarl, DK-2600 Glostrup (DK)
(72) Inventor: JACOBSEN, Anker Jarl, DK-2600 Glostrup (DK)
(74) Representative: Christiansen, Ejvind
(86) International application number: DK9100155
(87) International publication number: WO9119894

(56) References cited:
- EP-A- 0 298 288
- DE-A- 3 824 131
- US-A- 4 475 928

## Description

The invention concerns a method known from EP-A-0 079 364 for the recovery of petroleum for a mixture of air and hydrocarbons in the form of e.g. petrol vapour or of petrol vapour alone, in which e.g. the petrol vapour is partly absorbed in an absorption means by direct contact with a cooled petroleum distillate having a higher boiling point range than petrol, said petroleum distillate being supplied from a storage tank, transferred from the absorption means to a buffer tank and from the buffer tank to a stripping means in which the petrol dissolved in the petroleum is stripped, and from the stripping means to the storage tank so that the petroleum distillate circulates in a substantially closed circuit, whereby the petrol vapour is brought in direct contact with a petroleum distillate which is cooled sufficiently by heat-exchange with a cold reservoir in the storage tank to bring about a combined cooling condensation and absorption of the petrol vapour in the absorption means, the amount of cooled petroleum distillate caused to contact the petrol/air mixture being controlled so that the concentration of petrol in the petroleum distillate transferred to the buffer tank is substantially constant.

Many different processes emit considerable amounts of hydrocarbons, and this takes place not least from tank installations in the form of petrol vapour. This emission is very detrimental to the environment and moreover constitutes a considerable loss of expensive fuels, and accordingly it has long been endeavoured to solve this problem.

Thus, EP 0 298 288 discloses a method and a system where the content of petrol vapour in a mixture of petrol vapour and air is first reduced under cooling in a substance exchanger, following which the residual vapour is combusted in a petrol engine. Energy of the engine is partly used to drive a cooling means which is necessary for the reduction of the vapeur. However, because of the high voltage system for igniting the engine the use of this process involves safety hazards in precisely the areas where the inflammable and, under certain circumstances, explosive mixtures of air and hydrocarbons are handled, and to this should be added that the process is difficult to control and therefore frequently proceeds uneconomically, and that the resulting combustion products themselves moreover contain considerable amounts of uncombusted hydrocarbons.

The applicant's European Patent 0 079 364 discloses a method and a system for the recovery of petrol from a mixture of petrol vapour and air. A very high degree of recovery can be obtained by means of this method, but it leaves petrol vapours which must be vented to the atmosphere or be removed in another manner.

The object of the ivention is therefore to provide a method of the type stated in the opening paragraph which can strip contaminated air of a content of hydrocarbons and/or petrol vapours better than before with simultaneous utilization of these.

This is achieved by removing residual petrol vapour in the air, cleaned in said way, by supplying this air together with oil to the combustion chambers of at least one diesel engine and simultaneously supplying supplementary air to an extent where the oxygen in the cleaned air and the oxygen in the supplementary air bring the hydrocarbons in the petrol vapour and the oil to burn essentially stoichiometrically under high pressure during the working stroke when ignited by the increase of temperature during the compression stroke, wherein the energy emitted by the diesel engine is used partly to drive a petrol distillate cooling system in the storage tank and the hot gassed from the combustion process are used in a petrol distillate heating steam generator supplying steam via a conduit to a heating coil connected with the stripping means.

The method of the invention is used in connection with a system of the type described in the applicant's EP Patent O 079 364. The residual petrol vapours from this process are then removed by combustion in the diesel engine, and simultaneously the recovery process fully or partly receives the energy emitted by the diesel engine during this. This results in the greatest possible recovery of the expensive petrol at the least possible cost, since the energy for the recovery is obtained partly form the combustion of the residual petrol vapours, partly from the combustion of the oil which is cheaper to use than petrol. The use of a diesel engine to burn the residual petrol vapour eliminates the danger of explosion, because this type of engine has no high voltage system for igniting. Besides the use of exhaust gases heat to heat the distillate in the stripping means allows a more complete use of the engine energy.

To obtain ignition by the compression in the combustion chambers of the diesel engine and to fully burn the hydrocarbons during the working stroke it is necessary to reduce the quantity of hydrocarbons supplied to the diesel engine. For this purpose the hydrocarbons stripped in the stripping means are transferred to a washing chamber, through which liquid petrol absorbing hydrocarbons flow via respective inlet and outlet conduits.

For the recovery process is used a cooling system which can be driven either directly from the output shaft of the diesel engine via a transmission, or indirectly by means of the current from an electric generator which is connected with the output shaft.

In some cases the hydrocarbon content of the contaminated air is rather small, and according to the invention, the stripping process can then be regulated by using several diesel engines, there being coupled a number such that none or just a single engine needs supplementary air supply.

In particular when working with petrol vapours it may be advantageous to insert a gas mixture buffer in front of the diesel engine. This can then always run with optimum efficiency, since it starts only at a predetermined maximum filling of the buffer and stops at another predetermined minimum filling degree.

The exhaust gases from a diesel engine are very hot and can therefore be used for driving a vapour generator, which can in turn supply vapour for distillation of the petrol in the distillation column of the recovery system.

The invention will be explained more fully below with reference to the drawing, in which
fig. 1 is a block diagram showing a first embodiment of the method, used in connection with the method according to EP-A-0 079 364,
fig. 2 is a block diagram showing a second embodiment of the method used in connection with the method according to EP-A-0 079 364 and with a gas mixture buffer inserted in front of the diesel engine,
fig. 3 is a block diagram showing a third embodiment of the method used in connection with the method according to EP-A-0 079 364 and with several serially connected diesel engines,
fig. 4 is a block diagram showing a fourth embodiment of the method used in connection with the method according to EP-A-0 079 634, which in this case is showed fully.

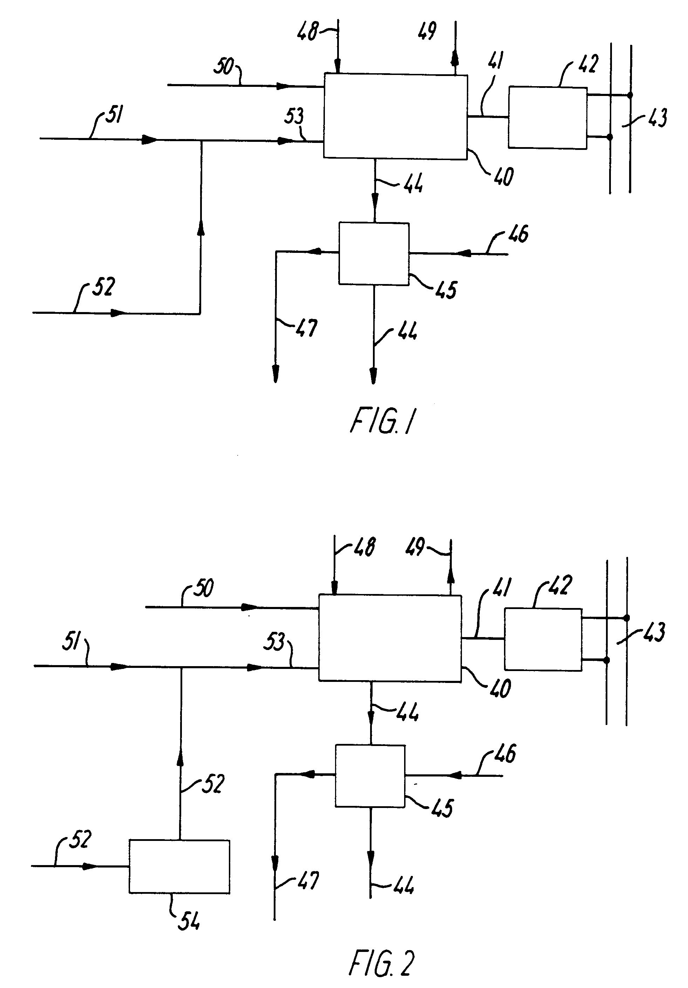

In the block diagram in fig. 1 the diesel engine is indicated by the reference numeral 40. The output shaft 41 of the engine is coupled to an electric generator 42, which supplies the electric wires 43 with electric current during operation. Instead of the electric generator, the output shaft 41 may be coupled to another power consuming machine, e.g. the compressor in a cooling system. The engine is moreover provided with an exhaust pipe 44 leading the very hot exhaust gases from the combustion process through a vapour generator 45, which, via a water conduit, receives water which, via a heat exchanger (not shown) in the vapour generator, is converted to vapour that is supplied to a service place (not shown) via a vapour conduit 47. The cooled exhaust gases are vented to the atmosphere, and in this connection it is not necessary to use a catalyst since the hydrocarbon content of the exhaust gases is very low. The shown engine is water cooled in this case, and the coolant is conveyed into the cooling jacket of the engine through a coolant conduit 48 and out again through a return coolant conduit 49. For example at a filling station, the hot coolant may be used for heating service water via a heat exchanger or be used directly as hot service water. The oil for driving the engine is supplied through an oil conduit 50, and the air for the combustion is added through an air supply conduit 51. This conduit is connected with a gas mixture conduit 52, which supplies the gas mixture which is to be stripped and which may consist of a mixture of air and hydrocarbons in the form of e.g. petrol vapour or of petrol vapour alone. The gas mixture from the gas mixture conduit 52 and the supplementary air from the air supply conduit 51 then flow together via a common conduit 53 into the diesel engine 40 during its suction stroke.

The hydrocarbons are combusted during the working stroke together with the added oil and consume the oxygen in the supplementary air as well as the oxygen in the air present in the gas mixture. To obtain optimum combustion, the total amount of air must correspond to the amount of air which can be deduced from the combustion equation. The pressure and the velocity of the gas mixture as well as its content of hydrocarbons and air must therefore be measured by means of probes which apply signals about the measured quantities to a control, which adjusts the supplementary air to the correct quantity via a valve or a throttle in response to the signals and the injected amount of oil. This regulation mechanism, which is not shown in the figure, is known per se and will therefore not be described in greater detail here.

When, as shown, the diesel engine is to drive an electric generator, this is usually to be driven with a constant number of revolutions and moment. However, the amount and the composition of the gas mixture are not constant, but can often fluctuate greatly. To compensate for this, the engine must be regulated by other means, and this is obtained particularly advantageously by means of a diesel engine which can be controlled exclusively by the variable supply of oil and thus does not need any form of throttle or lambda control.

As mentioned, the gas mixture will often flow rather irregularly to the diesel engine, which, however, works best with an even supply of the gas mixture. With a view to obtaining this, a gas mixture buffer 54 capable of collecting a suitable amount of gas mixture is therefore inserted in the gas mixture conduit 52, as shown in fig. 2. Then, the diesel engine is started only when a predetermined maximum filling degree is achieved in the buffer 54, and runs until the filling degree has dropped to a predetermined minimum size. The diesel engine can hereby be driven optimally, because it is now not necessary constantly to stop and start the engine again. As will be seen, a constant maximum speed faster than the flame front can thereby be maintained in the suction, thereby eliminating the risk of back flow through the common conduit 53.

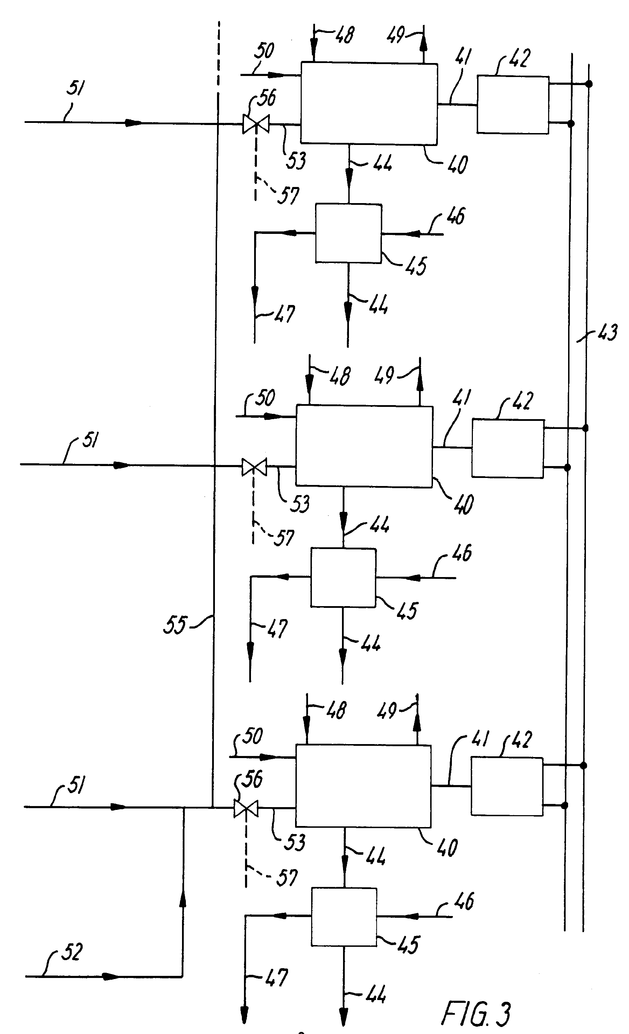

Fig. 3 shows an embodiment of the method with several diesel engines which are connected in series by means of a connecting conduit 55. This embodiment is useful in particular when gas mixtures containing a considerable constituent of air, i.e. relatively deluted mixtures, are to be handled. When the stripping process is to be initiated, the first engine is then initially started. If this engine requires no supplementary air in addition to the air already present in the gas mixture, the next engine in the series is started, and this continues until an engine requiring addition of supplementary air for working optimally is reached. The engines are coupled successively, a valve 56, which receives a control signal via an electric control wire 57, being opened for each individual engine.

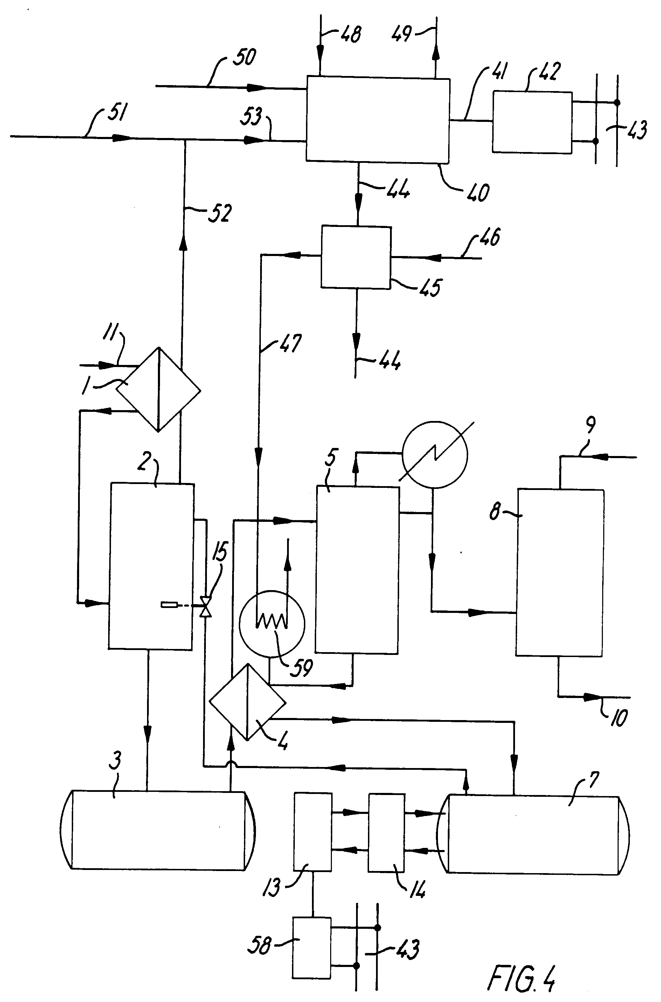

Finally, fig. 4 shows one embodiment of the method according to the invention, which is worked in cooperation with method and the system described in the applicant's EP Patent 0 079 364. The total process sequence will be described briefly below, the details of which being described more fully in said European patent.

The gas mixture to be cleaned is passed to the system via a conduit 11 after having first passed various non-return valves, etc. The gas mixture is first stripped off by far the greatest part of its water content in the heat exchanger 1, from which the mixture is conducted to an absorbtion means 2 which also receives cooled petroleum distillate via a controllable valve 15. In the absorbtion means 2 the petrol vapour is absorbed in the petroleum distillate, which is passed to a buffer tank 3, while the cleaned cold air is discharged into a conduit 52 via the heat exchanger 1, so that the cold air provides the cooling effect required to condense water. The petrolcontaining petroleum distillate is conducted from the buffer tank 3 to a stripping means, in the shown system a distillation column 5 where the petroleum distillate is stripped of petrol by heating and is then passed to a storage tank 7, in which the petroleum distillate is cooled before being recircled to the absorbtion means 2. The heat exchanger 4 reduces the power consumption of the system since the cold petroleum distillate from the buffer tank 3 is preheated before being transferred to the distillation column 5, while the hot petroleum distillate from the distillation column 5 is precooled before being transferred to the storage tank 7. It is observed that the heat exchanger 4 provides optimum savings in energy, because it can be dimensioned to a predetermined flow volume, which is substantially constant under all operating conditions owing to the presence of the buffer tank 3. The petrol vapours given off by the distillation are transferred to a washing chamber 8, e.g. a packed column, through which liquid petrol absorbing the petrol vapours flows via conduits 9, 10. Alternatively, the vapours may be condensed or compressed in a manner known per se. The numerals 13 and 14 represent a cooling system and a heat exchanger, respectively, for cooling the petroleum distillate in the storage tank.

By means of this process it is possible essentially to recover the expensive petrol, but the cold air flowing out into the conduit 52 from the heat exchanger 1 will still have a content of petrol vapours unacceptably high under certain conditions. The air thus still contaminated to a certain degree is therefore conducted via the conduit 53 into the diesel engine 40, in which the residual petrol vapours are combusted as described before, thereby cleaning the air optimally and utilizating the petrol vapours for generating various forms of energy.

This energy is now used advantageously in the preceding recovery process. The electric current, transmitted by the generator 42 into the electric wires 43, is thus caused to drive an engine 58 which drives the cooling system 13, this, however, may also be driven directly by the output shaft 41 of the diesel engine 40 via a suitable transmission. Correspondingly, the vapour, generated in the vapour generator 45 and fed through the vapour conduit 47, is used for heating the petroleum distillate in the distillation column 5 via a heating coil 59.

Finally, if desired, a catalyst and optionally also a soot filter may be inserted in the exhaust pipe of the engine with a view to restricting the pollution from the exhaust gases additionally and keeping it within the prescribed threshold values.

## Claims

1. A method for the recovery of petroleum from a mixture of air and hydrocarbons in the form of e.g. petrol vapour or of petrol vapour alone, in which e.g. the petrol vapour is partly absorbed in an absorption means (2) by direct contact with a cooled petroleum distillate having a higher boiling point range than petrol, said petroleum distillate being supplied from a storage tank (7), transferred from the absorption means (2) to a buffer tank (3) and from the buffer tank (3) to a stripping means (5) in which the petrol dissolved in the petroleum distillate is stripped and from the stripping means (5) to the storage tank (7) so that the petroleum distillate circulates in a substantially closed circuit, whereby the petrol vapour is brought in direct contact with a petroleum distillate which is cooled sufficiently by heat-exchange with a cold reservoir in the storage tank (7) to bring about a combined cooling condensation and absorption of the petrol vapour in the absorption means (2), the amount of cooled petroleum distillate caused to contact the petrol/air mixture being controlled so that the concentration of petrol in the petroleum distillate transferred to the buffer tank is substantially constant, **characterized** by removing residual petrol vapour in the air, cleaned in said way, by supplying this air together with oil to the combustion chambers of at least one diesel engine (40) and simultaneously supplying supplementary air to an extent where the oxygen in the cleaned air and the oxygen in the supplementary air bring the hydrocarbons in the petrol vapour and the oil to burn essentially stoichiometrically under high pressure during the working stroke when ignited by the increase of temperature during the compression stroke, wherein the energy emitted by the diesel engine (40) is used partly to drive a petrol distillate cooling system (13) in the storage tank (7) and the hot gasses from the combustion process are used in a petrol distillate heating steam generator (45) supplying steam via a conduit (47) to a heating coil (59) connected with the stripping means (5).

2. A method according to claim 1, **characterized** in that the hydrocarbons stripped in the stripping means (5) are transferred to a washing chamber (8), through which liquid petrol absorbing hydrocarbons flow via conduits (9, 10).

3. A method according to claim 1 or 2, **characterized** in that the output shaft (41) of the diesel engine (40) drives a generator (42) supplying current to the cooling system (13) of the recovery system.

4. A method according to claim 1, 2 or 3, **characterized** in that the output shaft (41) of the diesel engine (40) operates the cooling system (13) via a transmission.

5. A method according to one or more of claims 1-4, **characterized** by providing several diesel engines (40), and coupling such a number of these during the stripping of the gas mixture that none or just a single engine needs addition of supplementary air.

6. A method according to one or more of claims 1-5, **characterized** by providing a gas mixture buffer (54), and starting and stopping the stripping process in response to this filling degree.

## Patentansprüche

1. Ein Verfahren zur Rückgewinnung von Benzin aus einer Mischung aus Luft und Kohlenwasserstoffen in Form von z.B. Benzindampf oder Benzindampf allein, bei dem z.B. der Benzindampf in einem Absorptionsmittel (2) durch direkten Kontakt mit einem gekühlten Erdöldestillat, das einen höheren Siedepunkt als das Benzin hat, absorbiert wird, wobei das Erdöldestillat aus einem Vorratstank (7) eingespeist, vom Aborptionsmittel (2) in einen Puffertank (3) und vom Puffertank (3) zu einem Abtrennmittel (5), in dem das in Erdöldestillat gelöste Benzin abgetrennt wird, und vom Abtrennmittel (5) zu dem Vorratstank (7) überführt wird, so daß das Erdöldestillat in einem im wesentlichen geschlossenen Kreislauf zirkuliert, wodurch der Benzindampf in direkten Kontakt mit einem Erdöldestillat gebracht wird, das durch Wärmeaustausch mit einem kalten Reservoir im Vorratstank (7) ausreichend gekühlt wird, um eine kombinierte kühlende Kondensation und Absorption des Benzindampfes in dem Absorptionsmittel (2) herbeizuführen, wobei die Menge des gekühlten Erdöldestillats, das veranlaßt wird, die Benzin/Luftmischung zu kontaktieren so gesteuert wird, daß die Konzentration des Benzins in dem in den Puffertank überführten Erdöldestillat im wesentlichen konstant ist, **gekennzeichnet durch** Entfernen restlichen Benzindampfes in der auf diese Weise gereinigten Luft durch Einleiten dieser Luft zusammen mit Öl in die Brennkammern wenigstens eines Dieselmotors (40) und gleichzeitiger Zuführung zusätzlicher Luft in einem solchen Ausmaß, daß der Sauerstoff in der gereinigten Luft und der Sauerstoff in der zusätzlichen Luft die Kohlenwasserstoffe im Benzindampf und das Öl im wesentlichen stöchiometrisch unter hohem Druck während des Arbeitshubs zur Verbrennung bringen, wenn durch den Temperaturanstieg während des Kompressionshubs die Zündung erfolgt ist, wobei die vom Dieselmotor (40) abgegebene Energie teilweise dazu ausgenutzt wird, ein Benzindestillat-Kühlsystem (13) im Vorratstank (7) anzutreiben, und die heißen Gase aus dem Verbrennungsprozeß in einem Benzindestillat-Heizdampfgenerator (45) verwendet werden, der über eine Leitung (47) Dampf zu einer Heizwendel (59) liefert, die mit dem Abtrennmittel (5) verbunden ist.

2. Ein Verfahren nach Anspruch 1, dadurch gekennzeichnet, daß die in dem Abtrennmittel (5) abgetrennten Kohlenwasserstoffe in eine Waschkammer (8) überführt werden, durch welche über Leitungen (9, 10) flüssiges Benzin absorbierende Kohlenwasserstoffe fließen.

3. Ein Verfahren nach Anspruch 1 oder 2, dadurch gekennzeichnet, daß die Ausgangswelle (41) des Dieselmotors (40) einen Generator (42) antreibt, der Strom für das Kühlsystem (13) des Rückgewinnungssystems liefert.

4. Ein Verfahren nach Anspruch 1, 2 oder 3, dadurch gekennzeichnet, daß die Ausgangswelle (41) des Dieselmotors (40) das Kühlsystem (13) über eine Transmission betätigt.

5. Ein Verfahren nach einem oder mehreren der Ansprüche 1 bis 4, gekennzeichnet durch die Bereitstellung mehrerer Dieselmotoren (40) und Verkopplung einer solchen Anzahl derselben während des Abtrennens der Gasmischung, daß kein oder gerade ein einziger Motor die Zugabe zusätzlicher Luft erfordert.

6. Ein Verfahren nach einem oder mehreren der Ansprüche 1 bis 5, gekennzeichnet durch Bereitstellung eines Gasmischungspuffers (54) und Starten und Abstoppen des Abtrennprozesses in Abhängigkeit von dessen Füllstand.

## Revendications

1. Procédé pour récupérer du pétrole à partir d'un mélange d'air et d'hydrocarbures sous la forme de, par exemple, une vapeur d'essence ou d'une vapeur d'essence seule, dans lequel, par exemple, la vapeur d'essence est partiellement absorbée dans un moyen d'absorption (2) par contact direct avec un distillat de pétrole refroidi ayant une plage de point d'ébullition plus élevée que celle de l'essence, ledit distillat de pétrole étant amené d'une citerne (7) de stockage, transféré depuis le moyen d'absorption (2) vers une citerne-tampon (3) et de la citerne-tampon (3) à un moyen (5) d'extraction dans lequel l'essence dissoute dans le distillat de pétrole est extraite, et depuis le moyen d'extraction (5), à la citerne (7) de stockage afin que le distillat de pétrole circule dans un circuit sensiblement fermé, la vapeur d'essence étant amenée en contact direct avec un distillat de pétrole qui est refroidi suffisamment, par échange de chaleur avec un réservoir froid dans la citerne (7) de stockage, pour produire une condensation par refroidissement et une absorption combinées de la vapeur d'essence dans le moyen d'absorption (2), la quantité de distillat de pétrole refroidi mise en contact avec le mélange essence/air étant réglée de façon que la concentration de l'essence dans le distillat de pétrole transféré à la citerne-tampon soit sensiblement constante, caractérisé en ce qu'il consiste à éliminer la vapeur d'essence résiduelle se trouvant dans l'air, purifiés de ladite manière, en amenant cet air avec de l'huile aux chambres de combustion d'au moins un moteur diesel (40) et en amenant simultanément de l'air supplémentaire en quantités telles que l'oxygène dans l'air purifié et l'oxygène dans l'air supplémentaire provoquent une combustion essentiellement stoechiométrique sous pression élevée des hydrocarbures dans la vapeur d'essence et l'huile durant la course de travail lors d'une mise à feu par l'élévation de la température pendant la course de compression, l'énergie produite par le moteur diesel (40) étant utilisée partiellement pour entraîner un système de refroidissement (13) de distillat d'essence dans la citerne (7) de stockage et les gaz chauds provenant du processus de combustion sont utilisés en tant que générateur (45) de vapeur d'eau pour le chauffage du distillat d'essence, alimentant en vapeur d'eau, par l'intermédiaire d'un conduit (47), un serpentin chauffant (59) raccordé au moyen (5) d'extraction.

2. Procédé selon la revendication 1, caractérisé en ce que les hydrocarbures extraits dans le moyen (5) d'extraction sont transférés à une chambre (8) de lavage à travers laquelle des hydrocabrures absorbant de l'essence liquide s'écoulent par des conduits (9, 10).

3. Procédé selon la revendication 1 ou 2, caractérisé en ce que l'arbre de sortie (41) du moteur diesel (40) entraîne un générateur (42) fournissant du courant au système (13) de refroidissement du système de récupération.

4. Procédé selon la revendication 1, 2 ou 3, caractérisé en ce que l'arbre de sortie (41) du moteur diesel (40) actionne le système de refroidissement (13) par l'intermédiaire d'une transmission.

5. Procédé selon l'une ou plusieurs des revendications 1 à 4, caractérisé par la présence de plusieurs moteurs diesels (40) et l'accouplement d'un certain nombre de ceux-ci durant l'extraction du mélange gazeux de manière qu'aucun ou qu'un seul moteur ait besoin d'une addition d'air supplémentaire.

6. Procédé selon une ou plusieurs des revendications 1 à 5, caractérisé par la présence d'un tampon (54) de mélange gazeux et par la mise en marche et l'arrêt du processus d'extraction en réponse à ce degré de remplissage.
